# EUROPEAN PATENT SPECIFICATION

(11) **EP 4 397 396 B1**
(45) Date of publication and mention of the grant of the patent: **18.12.2024**
(21) Application number: 23168977.9
(22) Date of filing: 20.04.2023
(51) Int. Cl.: B01D 63/02, C02F 1/00

(54) **PUSH-TYPE WATER PURIFICATION CUP**
PUSH-TYP-WASSERAUFBEREITUNGSBECHER
TASSE DE PURIFICATION D'EAU DE TYPE POUSSOIR

(30) Priority: 04.01.2023 US 202318093160
(43) Date of publication of application: 10.07.2024
(73) Proprietor: Yongkang Vanvosanso Houseware Co., Ltd, Yongkang City, Zhejiang Province (CN)
(72) Inventor: YAN, Huachao, Fuyang City (CN); ZHOU, Xueyue, Yongkang City (CN)
(74) Representative: Chung, Hoi Kan

(56) References cited:
- CN-A- 114 938 909
- CN-U- 215 161 515
- CN-U- 217 610 436
- US-A1- 2020 317 554

## Description

### TECHNICAL FIELD

The present application relates to the technical field of water purification cup equipment, in particular to a push-type water purification cup.

### BACKGROUND

The existing water purification cup comprises an outer cup body and an inner cup body. The bottom of the inner cup body is provided with a sealing ring. The sealing ring is in contact with the inner wall of the outer and inner cup body to realize sealing, so that the water stored in the outer cup body enters the inner cup body after being filtered by the filter element at the bottom of the inner cup body. Existing filter elements mainly include pleated membranes and hollow fiber membranes. The characteristics of these two filter materials are that water molecules can pass through, but air molecules cannot pass through.

When the water purification cup is filtering water, water molecules can enter the inner cup body through the filter element, so the inner cup body can move down smoothly. However, when the water purification cup is not performing filtration, the inner cup body needs to be placed in the outer cup body for easy portability. Due to the existence of the bottom sealing ring of the inner cup body, the air between the outer cup body and the inner cup body cannot be discharged, and the downward pressing of the inner cup body produces a reaction force. This causes inconvenience to the assembly of the inner and outer cup bodies in an empty state. Therefore, those skilled in the art have proposed a push-type water purification cup to solve the above-mentioned existing technical problems.

CN215161515U discloses water purification cup which comprises an outer cup body and an inner cup body installed in the outer cup body, a water filtering component arranged at the lower end of the inner cup body, and the water filtering component located in the outer cup body.

### SUMMARY OF THE APPLICATION

Aiming at the deficiencies of the prior art, the present application provides a push-type water purification cup, which solves the problem of inconvenient assembly of the inner cup body and the outer cup body when the water purification cup is in an empty state.

In order to achieve the above purpose, the present application is achieved through the following technical solutions: A push-type water purification cup, comprising an upper shell, wherein a hollow fiber membrane is arranged in the inner middle part of the upper shell, and the outer periphery of the hollow fiber membrane is connected with the inner wall of the upper shell by glue, the top end of the upper shell is provided with an activated carbon filter cover, several upper permeable grooves are equidistantly arranged on the activated carbon filter cover, the middle and lower parts of both lateral ends of the outer side of the upper shell are respectively provided with buckle seats, the bottom of the upper shell is provided with a lower shell, the top edge of the lower shell is provided with a sealing groove, and buckle holes are arranged at the middle and lower parts of both sides of the sealing groove, and a sealing ring is arranged on the sealing groove, and several lower permeable grooves are equidistantly arranged at the bottom end of the lower shell, wherein the sealing groove is configured to match the sealing ring, the buckle seat and the buckle hole are engaged with each other.

Preferably, the top end of the upper shell is provided with a second screw connection part, and the second screw connection part is threadedly connected to the bottom end of the inner cup body, and the top end of the inner cup body is provided with a first screw connection part, and the first screw connection part is threadedly connected to the inner middle part of the cup cover.

Preferably, the inner wall of the cup cover is threadedly connected to the middle and upper part of the outer wall of the outer cup body, and the inner diameter of the outer cup body is larger than the inner diameter of the inner cup body.

Preferably, the sealing ring is made of silica gel.

Working principle: In the present application, when the inner cup body and the outer cup body are assembled in an empty state, the inner cup body needs to be slightly lifted up and down or swung left and right when the inner cup body is pressed down. During the movement of the inner cup body, the sealing ring in the sealing groove of the lower shell generates a gap during the movement process, and then connects the lower space of the inner cup body through the buckle hole, so that the air in the lower space of the inner cup body enters the sealing groove through the buckle hole, and then escape through the gap between the sealing groove and the sealing ring, so that the gas pressure between the inner cup body and the outer cup body is reduced, and the air resistance when the inner cup body is pressed down can also be reduced, thereby reducing the difficulty of assembling the inner cup body and the outer cup body.

The present application provides a push-type water purification cup. It has the following beneficial effects:

1) By setting of the buckle seats on the upper shell and the buckle holes on the lower shell, the assembly of the inner cup body and the outer cup body in an empty state is more convenient and labor-saving, which reduces the difficulty of assembling the water purification cup during use and is convenient for users to use.

2) The present application uses hollow fiber membranes and activated carbon filter caps to purify water with multiple facilities, thereby improving the water treatment capacity of the water purification cup and making it safer for users to drink.

### BRIEF DESCRIPTION OF THE DRAWINGS

Fig. 1 is an exploded schematic diagram of the overall device structure of the present application;
Fig. 2 is a schematic diagram of the combined structure of the integrated device of the present application;
Fig. 3 is an exploded schematic diagram of the local structure of the lower shell of the present application;
Fig. 4 is a schematic structural diagram of the lower shell of the present application;
Fig. 5 is a schematic structural diagram of the upper shell of the present application.

### Reference signs:

1. Outer cup body; 2. Cup cover; 3. First screw connection part; 4. Inner cup body; 5. Activated carbon filter cover; 6. Upper shell; 7. Hollow fiber membrane; 8. Lower shell; 9. Upper permeable groove 10. Second screw connection part; 11. Sealing ring; 12. Sealing groove; 13. Buckle hole; 14. Lower permeable groove; 15. Buckle seat.

### DETAILED DESCRIPTION

The technical solution in the embodiment of the present application will be clearly and completely described below in conjunction with the drawings in the embodiment of the present application. Apparently, the described embodiments are only some of the embodiments of this application, not all of them.

### Embodiment

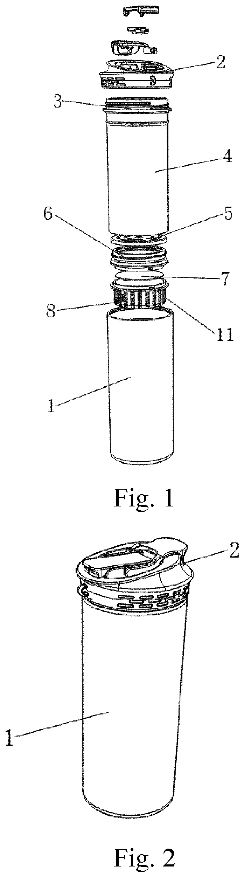

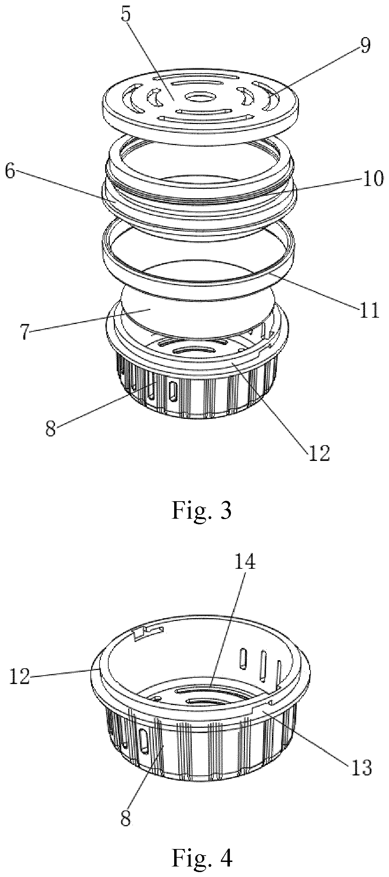

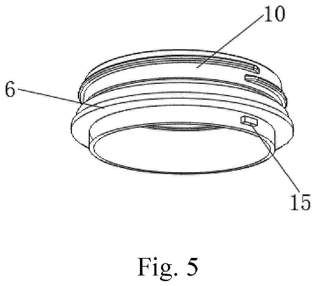

As shown in Figures 1-5, the embodiment of the present application provides a push-type water purification cup comprising: an upper shell 6, wherein a hollow fiber membrane 7 is arranged in the inner middle part of the upper shell 6, and the outer periphery of the hollow fiber membrane 7 is connected with the inner wall of the upper shell 6 by glue, the top end of the upper shell 6 is provided with an activated carbon filter cover 5, several upper permeable grooves 9 are equidistantly arranged on the activated carbon filter cover 5, the middle and lower parts of both lateral ends of the outer side of the upper shell 6 are respectively provided with buckle seats 15, the bottom of the upper shell 6 is provided with a lower shell 8, the top edge of the lower shell 8 is provided with a sealing groove 12, and buckle holes 13 are arranged at the middle and lower parts of both sides of the sealing groove 12, and a sealing ring 11 is arranged on the sealing groove 12, and several lower permeable grooves 14 are equidistantly arranged at the bottom end of the lower shell 8.

When the user assembles the bottom end of the inner cup body 4, the hollow fiber membrane 7 is glued to the inside of the upper shell 6 with glue, and the length of the PP surface is higher than the upper opening of the upper shell 6 when sealing. After the glue is cured, the excess hollow fiber membrane 7 is shortened to be flush with the upper opening of the upper shell 6, so that the through hole inside the hollow fiber membrane 7 can be exposed. When purifying water, the water in the outer cup body 1 first enters the inside of the lower shell 8 through the lower permeable groove 14 of the lower shell 8, and then passes through the hollow fiber membrane 7 and the activated carbon filter cover 5 successively to filter and purify the water. After the purification is completed, water enters into the inner cup body 4 from the upper permeable groove 9 on the activated carbon filter cover 5.

When the user assembles the inner cup body 4 and the outer cup body 1 in an empty state, the inner cup body 4 needs to be slightly lifted up and down or swung left and right when the inner cup body 4 is pressed down. During the movement of the inner cup body 4, the sealing ring 11 in the sealing groove 12 of the lower shell 8 generates a gap during the movement process, and then connects the lower space of the inner cup body 4 through the buckle hole 13, so that the air in the lower space of the inner cup body 4 enters the sealing groove 12 through the buckle hole 13, and then escape through the gap between the sealing groove 12 and the sealing ring 11, so that the gas pressure between the inner cup body 4 and the outer cup body 1 is reduced, and the air resistance when the inner cup body 4 is pressed down can also be reduced, thereby reducing the difficulty of assembling the inner cup body 4 and the outer cup body 1, and facilitating the press-type assembly of the purified water cup by the user.

The top end of the upper shell 6 is provided with a second screw connection part 10, and the second screw connection part 10 is threadedly connected to the bottom end of the inner cup body 4, and the top end of the inner cup body 4 is provided with a first screw connection part 3, and the first screw connection part 3 is threadedly connected to the inner middle part of the cup cover 2.

The upper shell 6 is connected to the bottom end of the inner cup body 4 through the second crew connection part 10 on the top end, and then the inner cup body 4 is threadedly connected to the inside of the cup cover 2 through the first crew connection part 3 on the top end, the overall inner cup body 4 and the filter assembly at the bottom are assembled, and users can disassemble and clean them according to their needs.

The inner wall of the cup cover 2 is threadedly connected to the middle and upper part of the outer wall of the outer cup body 1, and the inner diameter of the outer cup body 1 is larger than the inner diameter of the inner cup body 4.

The outer cup body 1 is screw-closed by the cup cover 2, which can prevent the water in the outer cup body 1 from leaking during use. The inner diameter of the outer cup body 1 is larger than the inner diameter of the inner cup body 4, so that the inner cup body 4 can be conveniently inserted into the outer cup body 1 when in use, thereby making it convenient for users to use.

The sealing groove 12 is configured to match the sealing ring 11, the buckle seat 15 and the buckle hole 13 are engaged with each other.

The sealing ring 11 in the sealing groove 12 can prevent the unpurified water inside the outer cup body 1 from entering into the inner cup body 4 and increase the tightness of the inner cup body 4 when in use. By setting of the buckle seat 15 on the upper shell 6 and the buckle hole 13 on the lower shell 8, the assembly of the inner cup body 4 and the outer cup body 1 in an empty state is more convenient and labor-saving, which reduces the difficulty of assembling the clean water cup during use.

The sealing ring 11 is made of silica gel. The sealing ring 11 made of silica gel has a long service life, and no harmful substances to the human body will be produced after soaking in water for a long time, which improves the drinking safety of the water purified by the water purification cup.

Although the embodiments of the present application have been shown and described, those skilled in the art can understand that various changes, modifications and substitutions can be made to these embodiments without departing from the principle of the present application, the scope of the application is defined by the appended claims.

## Claims

1. A push-type water purification cup, comprising an upper shell (6), wherein a hollow fiber membrane (7) is arranged in the inner middle part of the upper shell (6), and the outer periphery of the hollow fiber membrane (7) is connected with the inner wall of the upper shell (6) by glue, the top end of the upper shell (6) is provided with an activated carbon filter cover (5), several upper permeable grooves (9) are equidistantly arranged on the activated carbon filter cover (5), the middle and lower parts of both lateral ends of the outer side of the upper shell (6) are respectively provided with buckle seats (15), the bottom of the upper shell (6) is provided with a lower shell (8), the top edge of the lower shell (8) is provided with a sealing groove (12), and buckle holes (13) are arranged at the middle and lower parts of both sides of the sealing groove (12), and a sealing ring (11) is arranged on the sealing groove (12), and several lower permeable grooves (14) are equidistantly arranged at the bottom end of the lower shell (8), wherein the sealing groove (12) is configured to match the sealing ring (11), the buckle seat (15) and the buckle hole (13) are engaged with each other.

2. The push-type water purification cup according to claim 1, wherein the top end of the upper shell (6) is provided with a second screw connection part (10), and the second screw connection part (10) is threadedly connected to the bottom end of the inner cup body (4), and the top end of the inner cup body (4) is provided with a first screw connection part (3), and the first screw connection part (3) is threadedly connected to the inner middle part of the cup cover (2).

3. The push-type water purification cup according to claim 2, wherein the inner wall of the cup cover (2) is threadedly connected to the middle and upper part of the outer wall of the outer cup body (1), and the inner diameter of the outer cup body (1) is larger than the inner diameter of the inner cup body (4).

4. The push-type water purification cup according to claim 1, wherein the sealing ring (11) is made of silica gel.

## Patentansprüche

1. Druck-Typ-Wasserreinigungstasse, umfassend eine obere Schale (6), wobei eine Hohlfasermembran (7) im Inneren des Mittelteils der oberen Schale (6) angeordnet ist, und der Außenumfang der Hohlfasermembran (7) mit der Innenwand der oberen Schale (6) durch Klebstoff verbunden ist, wobei das Spitzenende der oberen Schale (6) mit einer Aktivkohlefilterabdeckung (5) versehen ist, und mehrere obere durchlässige Nuten (9) äquidistant auf der Aktivkohlefilterabdeckung (5) angeordnet sind, wobei die Mittel- und Unterteile der beiden seitlichen Enden der Außenseite der oberen Schale (6) jeweils mit Schnallensitzen (15) versehen sind, wobei der Boden der oberen Schale (6) mit einer unteren Schale (8) versehen ist, die Spitzenkante der unteren Schale (8) mit einer Dichtungsnut (12) versehen ist, und Schnallenlöcher (13) an den Mittel- und Unterteilen der beiden Seiten der Dichtungsnut (12) angeordnet sind und ein Dichtungsring (11) auf der Dichtungsnut (12) angeordnet ist, und mehrere untere durchlässige Nuten (14) äquidistant am Bodenende der unteren Schale (8) angeordnet sind, wobei die Dichtungsnut (12) entsprechend dem Dichtungsring (11) ausgebildet ist, wobei der Schnallensitz (15) und das Schnallenloch (13) ineinander eingreifen.

2. Druck-Typ-Wasserreinigungstasse nach Anspruch 1, wobei das Spitzenende der oberen Schale (6) mit einem zweiten Schraubverbindungsteil (10) versehen ist und das zweite Schraubverbindungsteil (10) mit dem Bodenende des inneren Tassenkörpers (4) durch Gewinde verbunden ist, und das Spitzenende des inneren Tassenkörpers (4) mit einem ersten Schraubverbindungsteil (3) versehen ist und das erste Schraubverbindungsteil (3) mit dem inneren Mittelteil der Tassenabdeckung (2) durch Gewinde verbunden ist.

3. Druck-Typ-Wasserreinigungstasse nach Anspruch 2, wobei die Innenwand der Tassenabdeckung (2) mit dem Mittel- und Oberteil der Außenwand des äußeren Tassenkörpers (1) durch Gewinde verbunden ist, und der innere Durchmesser des äußeren Tassenkörpers (1) größer ist als der innere Durchmesser des inneren Tassenkörpers (4).

4. Druck-Typ-Wasserreinigungstasse nach Anspruch 1, wobei der Dichtungsring (11) aus Kieselgel hergestellt ist.

## Revendications

1. Coupe de purification d'eau de type poussé, comprenant une coque supérieure (6), dans laquelle une membrane à fibres creuses (7) est disposée dans la partie médiane intérieure de la coque supérieure (6), et la périphérie extérieure de la membrane à fibres creuses (7) est reliée à la paroi intérieure de la coque supérieure (6) à l'aide de la colle, l'extrémité supérieure de la coque supérieure (6) est pourvue d'un couvercle à filtre à charbon actif (5), plusieurs rainures supérieures perméables (9) sont disposées à l'intervalle régulière sur le couvercle à filtre à charbon actif (5), les parties médiane et intérieure de deux extrémités latérales du côté extérieure de la coque supérieure (6) sont pourvues de sièges de fermoir (15) respectivement, le fond de la coque supérieure (6) est pourvu d'une coque inférieure (8), le bord supérieur de la coque inférieure (8) est pourvu d'une rainure d'étanchéité (12), et des trous de fermoir (13) sont disposés aux parties médiane et inférieure des deux côtés de la rainure d'étanchéité (12), et une bague d'étanchéité (11) est disposée sur la rainure d'étanchéité (12), et plusieurs rainures inférieures perméables (14) sont disposées à l'intervalle régulière à l'extrémité inférieure de la coque inférieure (8), dans laquelle la rainure d'étanchéité (12) est configurée pour s'adapter à la bague d'étanchéité (11), et le siège de fermoir (15) et le trou de fermoir (13) se enclenchent l'un avec l'autre.

2. Coupe de purification d'eau de type poussé selon la revendication 1, dans laquelle l'extrémité supérieure de la coque supérieure (6) est pourvue d'une seconde partie de raccordement à vis (10), et la seconde partie de raccordement à vis (10) est reliée par filetage à l'extrémité inférieure d'un corps de coupe intérieure (4), et l'extrémité supérieure du corps de coupe intérieure (4) est pourvue d'une première partie de raccordement à vis (3), et la première partie de raccordement à vis (3) est reliée par filetage à la partie médiane intérieure d'un couvercle de coupe (2).

3. Coupe de purification d'eau de type poussé selon la revendication 2, dans laquelle la paroi intérieure du couvercle de coupe (2) est reliée par filetage à la partie médiane supérieure de la paroi extérieure d'un corps de coupe extérieure (1), et le diamètre intérieur du corps de coupe extérieure (1) est supérieur au diamètre intérieur du corps de coupe intérieure (4).

4. Coupe de purification d'eau de type poussé selon la revendication 1, dans laquelle la bague d'étanchéité (11) est en gel de silice.
